# EUROPÄISCHE PATENTSCHRIFT

(11) **EP 3 058 302 B1**
(45) Veröffentlichungstag und Bekanntmachung des Hinweises auf die Patenterteilung: **25.09.2019**
(21) Anmeldenummer: 14700879.1
(22) Anmeldetag: 16.01.2014
(51) Int. Cl.: F28D 20/00, F28F 9/02

(54) **WÄRMESPEICHER MIT EINEM DIFFUSORABSCHNITT**
HEAT RESERVOIR COMPRISING A DIFFUSOR PORTION
ACCUMULATEUR DE CHALEUR COMPORTANT UNE PARTIE DIFFUSEUR

(43) Veröffentlichungstag der Anmeldung: 24.08.2016
(73) Patentinhaber: Siemens Gamesa Renewable Energy A/S, 7330 Brande (DK)
(72) Erfinder: BARMEIER, Till, Andreas, 20259 Hamburg (DE); DANOV, Vladimir, 91056 Erlangen (DE); KOSCHNITZKE, Dirk, 06420 Könnern (DE); PAPADOPOULOS, Theodoros, 80333 München (DE); USTINOV, Victor, 90765 Fuerth (DE)
(74) Vertreter: Aspacher, Karl-Georg
(86) Internationale Anmeldenummer: PCT/EP2014/050821
(87) Internationale Veröffentlichungsnummer: WO 2015/106815

(56) Entgegenhaltungen:
- EP-A2- 2 539 549
- WO-A1-2012/127178
- WO-A1-2012/127178
- WO-A2-2012/017041
- WO-A2-2013/093819
- US-A1- 2009 277 603

## Beschreibung

### Technisches Gebiet

Die vorliegende Erfindung betrifft einen Wärmespeicher und ein Dampfkraftwerk. Ferner betrifft die vorliegende Erfindung ein Verfahren zum Speichern von thermischer Energie.

### Hintergrund der Erfindung

Moderne Dampfkraftwerken weisen im allgemeinen einen Verdampfer auf, welchem thermische Energie zugeführt wird, um ein Arbeitsfluid, üblicherweise Wasser, zu verdampfen. Das verdampfte Wasser wird anschließend einer Dampfturbine zugeführt, welche einen elektrischen Generator zur Erzeugung von elektrischer Energie antreibt.

Gerade bei dem Einsatz von regenerativen Energiequellen, wie beispielsweise der Sonnenenergie, wird zu bestimmten Tageszeiten thermische bzw. elektrische Energie erzeugt, obwohl der Bedarf an elektrischer Energie zu diesem Zeitpunkt gering ist. Um die nicht verwendete thermische bzw. elektrische Energie nicht ungenutzt zu lassen, werden Wärmespeicher eingesetzt.

Wärmespeicher weisen im Allgemeinen ein Gehäuse auf, in welchem Speicherelemente angeordnet sind, um thermische Energie zu speichern. Wird zu einem Zeitpunkt Elektrizität erzeugt, obwohl kein oder kaum Bedarf an elektrischer Energie vorhanden ist, kann die Elektrizität in ein heißes Arbeitsfluid umgewandelt werden und dem Wärmespeicher zugeführt werden, um die darin vorliegenden Speicherelemente aufzuheizen. Zu einem späteren Zeitpunkt, zu welchem kaum thermische Energie erzeugt wird, der Bedarf an elektrischer Energie jedoch hoch ist, wird ein kühles Arbeitsfluid dem Wärmespeicher zugeführt und erwärmt, so dass im Anschluss das erwärmte Arbeitsfluid der Dampfturbine bzw. einem Wärmetauscher, mit welchem ein Arbeitsfluid der Dampfturbine erwärmbar ist, zugeführt wird, welche den elektrischen Generator zur Erzeugung von elektrischer Energie antreibt.

Um einen Wärmespeicher effizient zu gestalten, muss bei dem Erwärmen der Speicherelemente bzw. bei dem Erwärmen des Arbeitsmediums das Arbeitsmedium die Speicherelemente gleichmäßig mit einer niedrigen Strömungsgeschwindigkeit umströmen, um somit einen effizienten thermischen Austausch zwischen dem Arbeitsfluid und den Speicherelementen bereitzustellen. Damit das Arbeitsmedium gleichmäßig verteilt wird und das Arbeitsmedium die Speicherelemente gleichmäßig anströmt, werden in der Regel verschiedene Umlenk- und Luftleitbleche mit verschiedenster Geometrie eingesetzt. Eine solche Umlenkung des Arbeitsmediums führt jedoch auch zu einem Druckverlust. Um ein Arbeitsmedium gleichmäßig zu verteilen sind beispielsweise aus der Prozessindustrie so genannte Kolonnenböden verschiedenster Art und Weise (Glockenboden etc.) oder Kolonnen mit einer Schüttung bekannt. Verschiedene Arten von Lochblechen können auch eingesetzt werden, um z.B. eine Luftströmung zu verteilen. Alternative Lösungen dazu bieten beispielsweise WO 2012127178 A1, das einen Wärmespeicher gemäß dem Oberbegriff des Anspruchs 1 offenbart, US 20090277603 A1, WO2011104556A2 und WO 2013093819 A2. Dabei ist jeweils ein Diffusorabschnitt zur Verteilung des Arbeitsmediums auf den Wärmespeicher vorgesehen.

### Darstellung der Erfindung

Es ist eine Aufgabe der vorliegenden Erfindung, eine Strömungsverteilung eines Fluids in einem Wärmespeicher zu verbessern.

Diese Aufgabe wird mit einem Wärmespeicher und einem Verfahren zum Speichern von Energie gemäß den unabhängigen Patentansprüchen gelöst.

Gemäß der vorliegenden Erfindung wird ein Wärmespeicher beschrieben. Der Wärmespeicher weist ein Gehäuse und erste Speicherelemente zum Speichern von thermischer Energie auf, wobei die ersten Speicherelemente in dem Gehäuse angeordnet sind. Ferner weist der Wärmespeicher eine Einlasspassage (bzw. einen Einlasskanal) auf, welche an das Gehäuse derart gekoppelt ist, dass ein Arbeitsfluid durch die Einlasspassage in das Gehäuse einströmbar ist. Die Einlasspassage weist eine Einlassöffnung auf, durch welche das Arbeitsfluid von einer Umgebung des Wärmespeichers in die Einlasspassage einströmbar ist. Die Einlasspassage weist einen Diffusorabschnitt auf, welcher in einer Richtung von der Einlassöffnung zu dem Gehäuse einen größer werdenden Strömungsquerschnitt aufweist. Der Wärmespeicher ist dadurch gekennzeichnet, dass zweite Speicherelemente zum Speichern thermischer Energie in der Einlasspassage angeordnet sind und zumindest eines der zweiten Speicherelemente in dem Diffusorabschnitt angeordnet ist. Der Diffusorabschnitt weist einen ersten Bereich und einen zweiten Bereich auf, welcher entlang der Richtung von der Einlasspassage zu dem Gehäuse hinter dem ersten Bereich ausgebildet ist. Das zumindest eine zweite Speicherelement ist in dem zweiten Bereich angeordnet und der erste Bereich ist frei von zweiten Speicherelementen. Der erste Bereich weist einen Öffnungswinkel und der zweite Bereich einen weiteren Öffnungswinkel auf, wobei der Öffnungswinkel steiler ist als der weitere Öffnungswinkel.

Gemäß einem weiteren Aspekt der vorliegenden Erfindung wird ein Dampfkraftwerk zur Erzeugung elektrischer Energie beschrieben. Das Dampfkraftwerk weist den oben genannten Wärmespeicher auf.

Das Dampfkraftwerk weist ferner einen Verdampfer auf, welchem thermische Energie (z.B. aus Solarthermieanlagen) zugeführt wird, um ein Arbeitsfluid, üblicherweise Wasser, zu verdampfen. Das verdampfte Wasser wird anschließend einer Dampfturbine des Dampfkraftwerks zugeführt, welche einen elektrischen Generator zur Erzeugung von elektrischer Energie antreibt. Um die nicht verwendete thermische Energie nicht ungenutzt zu lassen, weist das Dampfkraftwerk den oben beschriebenen Wärmespeicher auf. Der Wärmespeicher ist insbesondere mit dem Verdampfer des Dampfkraftwerks gekoppelt, um zur Erwärmung das aufgewärmte Arbeitsfluid zu erhalten. Darüber hinaus ist der Wärmespeicher mit der Dampfturbine gekoppelt, um ein aufgewärmtes Arbeitsfluid der Dampfturbine bereitzustellen.

Gemäß der vorliegenden Erfindung wird weiterhin ein Verfahren zum Speichern von thermischer Energie beschrieben. Gemäß dem Verfahren wird ein Arbeitsfluid durch eine Einlasspassage in ein Gehäuse eines Wärmespeichers eingeströmt. Der Wärmespeicher ist entsprechend dem oben beschriebenen Wärmespeicher ausgebildet.

Das Gehäuse ist aus einem temperaturbeständigen Material (z.B. Blech oder Keramik) ausgeführt. Das Gehäuse ist beispielswese kubisch oder zylindrisch ausgebildet und weist zum Beispiel eine kreisförmige, ovale oder vieleckige Grundfläche auf. Das Gehäuse kann ferner beispielsweise als quaderförmiges Gebilde betrachtet werden. Das Gehäuse kann je nach Auslegungsdaten beispielsweise eine Querschnittsfläche bzw. Grundfläche von ungefähr 10 m x 10 m (Meter) und mehr aufweisen.

Die Einlasspassage ist hitzebeständig ausgebildet und besteht beispielsweise ebenfalls aus einem Blech. Die Einlasspassage ist beispielsweise an das Gehäuse lösbar befestigt oder an das Gehäuse angeschweißt. Ferner kann die Einlasspassage mit dem Gehäuse integral und einstückig ausgebildet sein.

Die Einlasspassage weist beispielsweise eine Einlassöffnung auf, durch welche ein Arbeitsfluid, sei es zum Beheizen der Speicherelemente oder zum Aufnehmen von Wärme von den Speicherelementen, von einer Zuführleitung in die Einlasspassage oder beispielsweise von dem Gehäuse zu der Einlassöffnung strömen kann. Die Zuführleitung und entsprechend die Einlasspassage im Bereich der Einlassöffnung weisen beispielsweise einen Durchmesser von ungefähr 0,5 m bis ungefähr 4 m, üblicherweise zwischen ungefähr 1 m bis 2 m (Meter) auf. Dadurch muss das Arbeitsfluid (Wasserdampf oder Gas) von einem Strömungsquerschnitt im Bereich der Einlassöffnung der Einlasspassage auf einen Strömungsquerschnitt des Gehäuses, beispielsweise einem Strömungsquerschnitt von ungefähr 10 m x 10 m (oder einem Durchmesser von ungefähr 8 m bis 12 m), verteilt werden. Andere Dimensionierungen des Wärmespeichers sind ebenfalls möglich.

Um das Arbeitsfluid konstant am Eingang in das Gehäuse zu verteilen, weist die Einlasspassage einen Diffusorabschnitt auf, welcher in Richtung von der Einlassöffnung zu dem Gehäuse einen größer werdenden Strömungsquerschnitt aufweist. Somit wird die Strömungsgeschwindigkeit des Arbeitsfluids reduziert und gleichzeitig eine konstante Verteilung des Arbeitsfluids am Eingang in das Gehäuse (d.h. im Übergang zwischen der Einlasspassage und dem Gehäuse) erzielt. Das beispielsweise langsamere Arbeitsfluid, welches eine konstante Verteilung über den Strömungsquerschnitt im Gehäuse aufweist, kann bei nachfolgender Umspülung der Speicherelemente sehr effizient thermische Energie aufnehmen oder entsprechend abgeben. Durch den Einsatz des Diffusorabschnitts wird ferner ein geringerer Druckverlust bei gleichzeitig sich einstellender gleichmäßigen Verteilung des Arbeitsfluids erzielt als bei herkömmlichen Umlenkblechen, welche in dem Strömungskanal direkt angeordnet sein können.

Das Arbeitsfluid zum Aufwärmen der Speicherelemente kann Wasser (insbesondere heißer, überhitzter Wasserdampf), Luft, Stickstoff oder Argon sein. Ein Arbeitsfluid, bzw. weiteres Arbeitsfluid, welches zum Erhitzen in den Wärmespeicher strömt, ist z.B. Wasser, welches z.B. in flüssigen Zustand einströmt, Wasserdampf, Luft, Stickstoff oder Argon sein.

Insbesondere kann das oben beschriebene Dampfkraftwerk einen Wasser/Wasserdampf-Kreislauf oder einen Gas/Wasserdampf-Kreislauf aufweisen, welche mit einem Wärmetauscher mit einem Arbeitsfluidkreislauf des Wärmespeichers gekoppelt sind. Somit kann der Wärmespeicher ein Arbeitsfluid mit guter Wärmekapazität, zum Beispiel Stickstoff oder Argon, aufweisen, um in einem Aufwärmmodus die Speicherelemente des Wärmespeichers zu erhitzen oder um in einem Abkühlmodus die Speicherelemente des Wärmespeichers abzukühlen und entsprechend thermische Energie aufzunehmen. Das Arbeitsfluid kann die thermische Energie mittels des Wärmetauschers an das Arbeitsmedium des Dampfkraftwerks (üblicherweise Wasser/Wasserdampf) abgeben oder entsprechend thermische Energie aufnehmen.

Die Speicherelemente, d.h. die ersten, zweiten und/oder dritten Speicherelement wie weiter unten beschreiben bestehen aus Steinen, insbesondere Lavasteinen, Keramikelementen, Ziegelelementen, Granit oder Basalt. Die Speicherelemente werden als Schüttgut bereitgestellt und weisen eine hohe Wärmespeicherkapazität auf.

Der erfindungsgemäße Wärmespeicher weist somit ein neuartiges Konzept zur Arbeitsfluidverteilung, insbesondere bei dem Einströmen des Arbeitsfluids in das Gehäuse des Wärmetauschers, auf. Dies wird insbesondere dadurch erzielt, indem in der Einlasspassage ein Diffusorabschnitt ausgebildet wird. Somit kann in einem kurzen Diffusorabschnitt der Einlasspassage eine gute Verteilung des Arbeitsfluids und gleichzeitig eine Verlangsamung des Arbeitsfluids eingestellt werden, ohne einen allzu hohen Druckverlust zu bewirken. Aufgrund dieser druckverlustarmen Verteilung des Arbeitsfluids und der gleichzeitigen Geschwindigkeitsreduzierung des Arbeitsfluids wird eine gute Verteilungswirkung des Arbeitsfluids bei gleichzeitig geringem Druckverlust erzielt. Dies führt wiederum zu einer verbesserten thermischen Wechselwirkung zwischen dem Arbeitsfluid und den Speicherelementen, so dass der Wärmetauscher effizienter arbeitet.

Ferner kann der Wärmespeicher neben einem Dampfkraftwerk bzw. dessen Dampfkreislauf auch mit anderen Kreisläufen gekoppelt werden und die Wärme dieser Kreisläufe speichern oder abgeben. Beispielsweise kann der Wärmespeicher direkt oder indirekt über einen Wärmetauscher mit einem ORC- (Organic Rankine Cycle-) Kreislauf oder einem CO2-Kreislauf gekoppelt werden.

Gemäß einer weiteren beispielhaften Ausführungsform weist der Diffusorabschnitt einen Diffusorwinkel von (ungefähr) 45° bis 60°, insbesondere 55°, auf.

Erfindungsgemäß weist der Diffusorabschnitt einen ersten Bereich und einen zweiten Bereich auf, welcher entlang der Richtung von der Einlassöffnung zu dem Gehäuse hinter dem ersten Bereich ausgebildet ist. Das zumindest eine zweite Speicherelement ist in dem zweiten Bereich angeordnet und der erste Bereich ist frei von zweiten Speicherelementen.

Die zweiten Speicherelemente, welche in einem zweiten Bereich des Diffusorabschnitts angeordnet sind, können in einer vorgegebenen Anordnung und Ausrichtung angeordnet sein und somit als Strömungselemente dienen.

Der erste Bereich des Diffusorabschnitts weist keine zweiten Speicherelemente auf und dient ausschließlich zur Reduzierung der Strömungsgeschwindigkeit des Arbeitsfluids und zur Verteilung des Arbeitsfluids. Die zweiten Speicherelemente in dem zweiten Bereich dienen zusätzlich zur Verteilung der Strömung des Arbeitsfluids. Diese Kombination des ersten Bereichs und des zweiten Bereichs des Diffusorabschnitts liefert eine gute Kombination aus Verteilungswirkung des Arbeitsfluids, kleinem Druckverlust des Arbeitsfluids und kleinem Volumen der Einlasspassage. Der Diffusorabschnitt kann dadurch beispielsweise einen deutlich größeren Diffusorwinkel z.B. ungefähr 45° bis 80°, insbesondere bis 60°, aufweisen.

Gemäß einer weiteren beispielhaften Ausführungsform weist der Wärmespeicher einen Auslasskanal auf, welcher an das Gehäuse derart gekoppelt ist, dass das Arbeitsfluid durch den Auslasskanal aus dem Gehäuse ausströmbar ist. Somit wird ein Kreislauf des Arbeitsfluids im Wärmespeicher gebildet, wobei das Arbeitsfluid durch die Einlasspassage einströmt und nach dem Durchströmen des Gehäuses durch den Auslasskanal ausströmt.

Gemäß einer weiteren beispielhaften Ausführungsform weist der Auslasskanal eine Auslassöffnung auf, durch welche das Arbeitsfluid aus dem Gehäuse in den Auslasskanal einströmbar ist. Der Auslasskanal weist einen Düsenabschnitt auf, welcher in einer Richtung von dem Gehäuse zu der Auslassöffnung einen kleiner werdenden Strömungsquerschnitt aufweist.

Mittels des Düsenabschnitts wird beispielsweise die Geschwindigkeit des Arbeitsfluids erneut erhöht und ebenfalls eine Druckerhöhung erzeugt.

Gemäß einer weiteren beispielhaften Ausführungsform weist der Wärmespeicher dritte Speicherelemente zum Speichern thermischer Energie, welche in dem Auslasskanal angeordnet sind, auf.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Figuren näher beschrieben.
- Fig. 1: zeigt eine schematische Darstellung eines nicht zur beanspruchten Erfindung gehörenden Wärmespeichers,

- Fig.2: zeigt eine schematische Darstellung eines erfindungsgemäßen Wärmespeichers, und
- Fig. 3: zeigt eine schematische Darstellung einer Einlasspassage eines nicht zur beanspruchten Erfindung gehörenden Wärmespeichers.

### Detaillierte Beschreibung von exemplarischen Ausführungsformen

Gleiche oder ähnliche Komponenten sind in den Figuren mit gleichen Bezugsziffern versehen. Die Darstellungen in den Figuren sind schematisch und nicht maßstäblich.

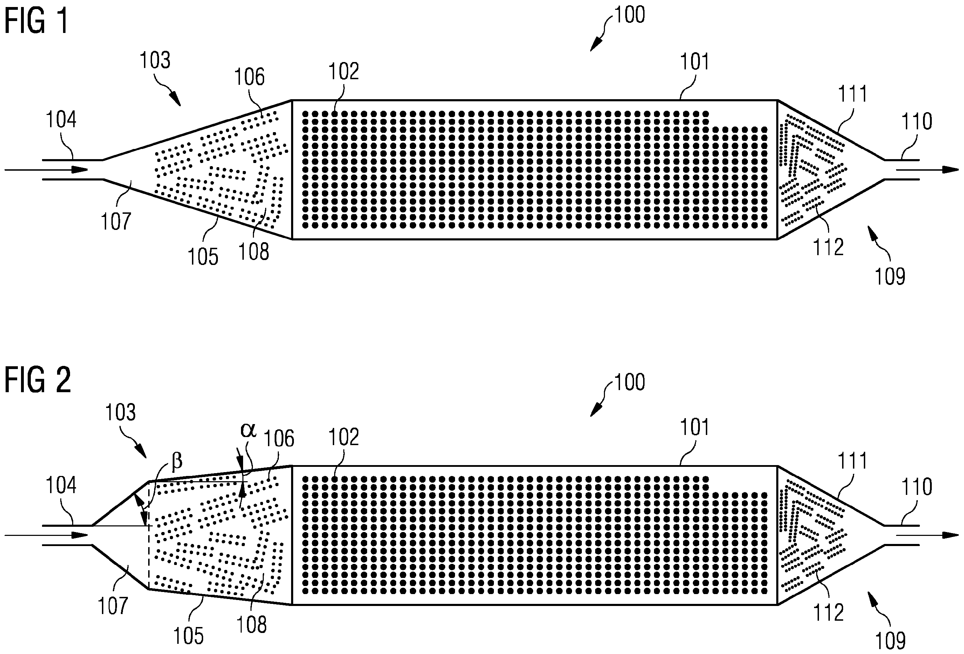

**Fig. 1** zeigt einen nicht zur beanspruchten Erfindung gehörenden Wärmespeicher 100. Der Wärmespeicher 100 weist ein Gehäuse 101, erste Speicherelemente 102 zum Speichern von thermischer Energie und eine Einlasspassage 103 auf. Die ersten Speicherelemente 102 sind in dem Gehäuse 101 angeordnet. Die Einlasspassage 103 ist an das Gehäuse 101 derart gekoppelt, dass ein Arbeitsfluid durch die Einlasspassage 103 in das Gehäuse 101 einströmbar ist. Die Einlasspassage 103 weist eine Einlassöffnung 104 auf, durch welche das Arbeitsfluid von einer Umgebung des Wärmespeichers 100 in die Einlasspassage 103 einströmbar ist. Die Einlasspassage 103 weist einen Diffusorabschnitt 105 auf, welcher in einer Richtung von der Einlassöffnung 104 zu dem Gehäuse 101 einen größer werdenden Strömungsquerschnitt aufweist.

Der in Fig. 1 gezeigte Wärmespeicher 100 ist beispielsweise in einem Dampfkraftwerk zur Erzeugung elektrischer Energie verwendbar bzw. einsetzbar.

Das Gehäuse 101 ist beispielsweise aus temperaturbeständigem Blech ausgeführt. Das Gehäuse 101 ist ferner zylindrisch ausgebildet und weist zum Beispiel eine kreisförmige, ovale oder vieleckige Grundfläche auf.

Die Einlasspassage 103 ist hitzebeständig ausgebildet und besteht beispielsweise ebenfalls aus einem Blech. Die Einlasspassage 103 ist beispielsweise an das Gehäuse 101 lösbar befestigt oder an das Gehäuse 101 angeschweißt. Ferner kann die Einlasspassage 103 mit dem Gehäuse 101 integral und einstückig ausgebildet sein.

Die Einlasspassage 103 weist beispielsweise die Einlassöffnung 104 auf, durch welche das Arbeitsfluid, sei es zum Beheizen der Speicherelemente 102, 106, 112 oder zum Aufnehmen von Wärme von den Speicherelementen 102, 106, 112, von einer Zuführleitung in die Einlasspassage 103 oder beispielsweise von dem Gehäuse 101 zu der Einlassöffnung 104, strömen kann. Dadurch muss das Arbeitsfluid (Wasserdampf oder Gas) von einem Strömungsquerschnitt im Bereich der Einlassöffnung 104 der Einlasspassage 103 auf einen Strömungsquerschnitt des Gehäuses 101, beispielsweise einem Strömungsquerschnitt von ungefähr 10 m x 10 m (oder einem Durchmesser von ungefähr 8 m bis 12 m), verteilt werden.

Um das Arbeitsfluid konstant am Eingang in das Gehäuse 101 zu verteilen, weist die Einlasspassage 103 den Diffusorabschnitt 105 auf, welcher in Richtung von der Einlassöffnung 104 zu dem Gehäuse 101 einen größer werdenden Strömungsquerschnitt aufweist. Somit wird die Strömungsgeschwindigkeit des Arbeitsfluids reduziert und gleichzeitig eine konstante Verteilung des Arbeitsfluids am Eingang in das Gehäuse 101 (d.h. im Übergang zwischen der Einlasspassage 103 und dem Gehäuse 101) erzielt. Das langsamere Arbeitsfluid, welches eine konstante Verteilung über den Strömungsquerschnitt im Gehäuse 101 aufweist, kann bei nachfolgender Umspülung der Speicherelemente 102, 106, 112 sehr effizient thermische Energie aufnehmen oder entsprechend abgeben. Durch den Einsatz des Diffusorabschnitts 105 wird ferner ein geringerer Druckverlust bei gleichzeitig sich einstellender gleichmäßigen Verteilung des Arbeitsfluids erzielt.

In dem kurzen Diffusorabschnitt 105 der Einlasspassage 103 kann eine homogene Verteilung des Arbeitsfluids und gleichzeitig eine Verlangsamung des Arbeitsfluids eingestellt werden, ohne einen allzu hohen Druckverlust zu bewirken.

Die weiten zweiten Speicherelemente 106 zum Speichern thermischer Energie sind in der Einlasspassage 103 angeordnet. Wie in Fig. 1 dargestellt, ist zumindest eines der zweiten Speicherelemente 106 oder alle zweiten Speicherelemente 106 in dem Diffusorabschnitt 105 angeordnet.

Insbesondere weist der Diffusorabschnitt 105 einen ersten Bereich 107 und einen zweiten Bereich 108 auf, welcher entlang der Richtung von der Einlassöffnung 104 zu dem Gehäuse 101 hinter dem ersten Bereich 107 ausgebildet ist. Die Richtung wird in Fig. 1 mit den dort gezeigten Pfeilen dargestellt. Das zumindest eine zweite Speicherelement 106 ist in dem zweiten Bereich 108 angeordnet und der erste Bereich 107 ist frei von zweiten Speicherelementen 106.

Die zweiten Speicherelemente 106, welche in der Einlasspassage 103, insbesondere in einem zweiten Bereich 108 des Diffusorabschnitts 105, angeordnet sind, können in einer vorgegebenen Anordnung und Ausrichtung angeordnet sein.

Der erste Bereich 107 des Diffusorabschnitts 105 weist keine zweiten Speicherelemente 106 auf und dient ausschließlich zur Reduzierung der Strömungsgeschwindigkeit des Arbeitsfluids und zur Verteilung des Arbeitsfluids. Die zweiten Speicherelemente 106 in dem zweiten Bereich 108 dienen zusätzlich zur Verteilung der Strömung des Arbeitsfluids. Diese Kombination des ersten Bereichs 107 und des zweiten Bereichs 108 des Diffusorabschnitts 105 liefert eine gute Kombination aus Verteilungswirkung des Arbeitsfluids, kleinem Druckverlust des Arbeitsfluids und kleinem Volumen der Einlasspassage 103.

Ferner weist der Wärmespeicher 100 einen Auslasskanal 109 auf, welcher an das Gehäuse 101 derart gekoppelt ist, dass das Arbeitsfluid durch den Auslasskanal 109 aus dem Gehäuse 101 ausströmbar ist. Somit wird ein Kreislauf des Arbeitsfluids im Wärmespeicher 100 gebildet, wobei das Arbeitsfluid durch die Einlasspassage 103 einströmt und nach dem Durchströmen des Gehäuses 101 durch den Auslasskanal 109 ausströmt.

Der Auslasskanal 109 weist eine Auslassöffnung 110 auf, durch welche das Arbeitsfluid aus dem Gehäuse 101 aus dem Auslasskanal 109 ausströmbar ist. Der Auslasskanal 109 weist einen Düsenabschnitt 111 auf, welcher in einer Richtung (siehe Pfeile) von dem Gehäuse 101 zu der Auslassöffnung 110 einen kleiner werdenden Strömungsquerschnitt aufweist.

Mittels des Düsenabschnitts 111 wird beispielsweise die Geschwindigkeit des Arbeitsfluids erneut erhöht und ebenfalls eine Druckerhöhung erzeugt.

Der Wärmespeicher 100 weist ferner dritte Speicherelemente 112 zum Speichern thermischer Energie auf, welche in der Auslasspassage 109 angeordnet sind.

**Fig. 2** zeigt einen erfindungsgemäßen Wärmespeicher 100, welcher dieselben Merkmale wie der Wärmetauscher 100 aus Fig. 1 aufweist. In Fig. 2 ist der Diffusorabschnitt 105 mit zwei Diffusorwinkeln α und β dargestellt. In dem ersten Bereich 107 weist der Diffusorabschnitt 105 einen Öffnungswinkel bzw. Diffusorwinkel β und in dem zweiten Bereich 108 weist der Diffusorabschnitt 105 einen weiteren Öffnungswinkel bzw. Diffusorwinkel α auf. In der beispielhaften Ausführungsform in Fig. 2 ist der Diffusorwinkel β deutlich steiler, zum Beispiel 60° bis 80°, als der flachere Diffusorwinkel α des zweiten Bereichs 108. Der Diffusorwinkel α weist beispielsweise einen Öffnungswinkel von 10° bis 30° auf.

Somit wird die Verteilung des einströmenden bzw. ausströmenden Fluids bei geringerem Druckverlust erzielt.

Entsprechend dem Diffusorabschnitt 105 kann in einer weiteren beispielhaften Ausführungsform auch der Düsenabschnitt 111 ausgebildet sein, wobei beispielsweise ein erster Bereich des Düsenabschnitts 111 flacher ist bzw. eine kleinere Zuspitzung aufweist als ein stromabwärts zum ersten Bereich gelegener zweiter Bereich des Düsenabschnitts 111, welcher eine größeren Düsenwinkel bzw. eine größere Zuspitzung aufweist.

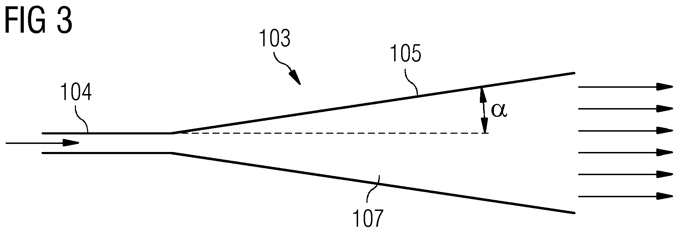

**Fig. 3** zeigt eine nicht zur beanspruchten Erfindung gehörende Einlasspassage 103. In Fig. 3 wird insbesondere der erste Bereich 107 des Diffusorabschnitts 105 dargestellt. Durch die Einlassöffnung 104 der Einlasspassage 103 strömt das Arbeitsfluid in den ersten Bereich 107. Der erste Bereich 107 weist eine Wandung mit einem konischen Verlauf auf, wobei der Strömungsquerschnitt von der Einlassöffnung 104 entlang der Strömungsrichtung (siehe Pfeile) sich vergrößert.

Zur Verdeutlichung des Diffusorabschnitts 105 wird der Diffusorwinkel α dargestellt. Der Diffusorwinkel α wird beispielsweise zwischen dem Verlauf der Wand des Diffusorabschnitts 105 und einer Mittelachse bzw. einer parallelen Linie (siehe gestrichelte Linie in Fig. 3) zur Mittelachse bestimmt.

Der Diffusorabschnitt weist einen Diffusorwinkel von (ungefähr) 45° bis 60° auf.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Wärmespeicher (100), aufweisend
ein Gehäuse (101),
erste Speicherelemente (102) zum Speichern von thermischer Energie,
wobei die ersten Speicherelemente (102) in dem Gehäuse (101) angeordnet sind, und
eine Einlasspassage (103), welche an das Gehäuse (101) derart gekoppelt ist, dass ein Arbeitsfluid durch die Einlasspassage (103) in das Gehäuse (101) einströmbar ist, wobei die Einlasspassage (103) eine Einlassöffnung (104) aufweist, durch welche das Arbeitsfluid von einer Umgebung des Wärmespeichers (100) in die Einlasspassage (103) einströmbar ist, und
wobei die Einlasspassage (103) einen Diffusorabschnitt (105) aufweist, welcher entlang einer Richtung von der Einlassöffnung (104) zu dem Gehäuse (101) einen größer werdenden Strömungsquerschnitt aufweist, wobei zweite Speicherelemente (106) zum Speichern thermischer Energie in der Einlasspassage (103) angeordnet sind und zumindest eines der zweiten Speicherelemente (106) in dem Diffusorabschnitt (105) angeordnet ist,
wobei der Diffusorabschnitt (105) einen ersten Bereich (107) und einen zweiten Bereich (108) aufweist, welcher entlang der Richtung von der Einlassöffnung (104) zu dem Gehäuse (101) hinter dem ersten Bereich (107) ausgebildet ist,
wobei das zumindest eine zweite Speicherelement (106) in dem zweiten Bereich (108) angeordnet ist und der erste Bereich (107) frei von zweiten Speicherelementen (106) ist, **gekennzeichnet dadurch, dass** der erste Bereich (107) einen Öffnungswinkel (β) und der zweite Bereich (108) einen weiteren Öffnungswinkel (α) aufweist,
wobei der Öffnungswinkel (β) steiler ist als der weitere Öffnungswinkel (α).

2. Wärmespeicher (100) gemäß Anspruch 1,
wobei der Diffusorabschnitt (105) einen Diffusorwinkel (α) von 45° bis 60° aufweist.

3. Wärmespeicher (100) gemäß Anspruch 1 oder 2,
wobei die Speicherelemente (102, 106) Steine, insbesondere Lavasteine, Keramikelemente, Ziegelelemente, Granit oder Basalt aufweisen.

4. Wärmespeicher (100) gemäß einem der Ansprüche 1 bis 3, ferner aufweisend
einen Auslasskanal (109), welcher an das Gehäuse (101) derart gekoppelt ist, dass das Arbeitsfluid durch den Auslasskanal (109) aus dem Gehäuse (101) ausströmbar ist.

5. Wärmespeicher (100) gemäß Anspruch 4,
wobei der Auslasskanal (109) eine Auslassöffnung (110) aufweist, durch welche ein weiteres Arbeitsfluid aus dem Gehäuse (101) in den Auslasskanal (109) einströmbar ist, und
wobei der Auslasskanal (109) einen Düsenabschnitt (111) aufweist, welcher entlang einer Richtung von dem Gehäuse (101) zu der Auslassöffnung (110) einen kleiner werdenden Strömungsquerschnitt aufweist.

6. Wärmespeicher (100) gemäß Anspruch 5, ferner aufweisend
dritte Speicherelemente (112) zum Speichern thermischer Energie, welche in dem Auslasskanal (109) angeordnet sind.

7. Dampfkraftwerk zur Erzeugung elektrischer Energie, das Dampfkraftwerk aufweisend
einen Wärmespeicher (100) gemäß einem der Ansprüche 1 bis 6.

8. Verfahren zum Speichern von thermischer Energie mit Hilfe eines Wärmespeichers gemäß einem der Ansprüche 1 bis 6, das Verfahren aufweisend
Einströmen eines Arbeitsfluids durch eine Einlasspassage (103) in ein Gehäuse (101) eines Wärmespeichers (100),
wobei der Wärmespeicher (100) ein Gehäuse (101) und erste Speicherelemente (102) zum Speichern von thermischer Energie aufweist,
wobei die ersten Speicherelemente (102) in dem Gehäuse (101) angeordnet sind,
wobei die Einlasspassage (103) eine Einlassöffnung (104) aufweist, durch welche das Arbeitsfluid von einer Umgebung des Wärmespeicers in die Einlasspassage (103) einströmbar ist, und
wobei die Einlasspassage (103) einen Diffusorabschnitt (105) aufweist, welcher entlang einer Richtung von der Einlassöffnung (104) zu dem Gehäuse (101) einen größer werdenden Strömungsquerschnitt aufweist und
zumindest ein zweites Speicherelement (106) zum Speichern thermischer Energie in dem Diffusorabschnitt (105) angeordnet ist,
wobei der Diffusorabschnitt (105) einen ersten Bereich (107) und einen zweiten Bereich (108) aufweist, welcher entlang der Richtung von der Einlassöffnung (104) zu dem Gehäuse (101) hinter dem ersten Bereich (107) ausgebildet ist,
wobei das zumindest eine zweite Speicherelement (106) in dem zweiten Bereich (108) angeordnet ist und der erste Bereich (107) frei von zweiten Speicherelementen (106) ist, **gekennzeichnet dadurch, dass** der erste Bereich (107) einen Öffnungswinkel (β) und der zweite Bereich (108) einen weiteren Öffnungswinkel (α) aufweist,
wobei der Öffnungswinkel (β) steiler ist als der weitere Öffnungswinkel (α).

## Claims

1. Heat accumulator (100), having
a housing (101),
first storage elements (102) for storing thermal energy,
the first storage elements (102) being arranged in the housing (101), and
an inlet passage (103), which is coupled to the housing (101) in such a way that a working fluid can flow into the housing (101) through the inlet passage (103),
the inlet passage (103) having an inlet opening (104), through which the working fluid can flow into the inlet passage (103) from an area surrounding the heat accumulator (100), and
the inlet passage (103) having a diffuser portion (105), which has a flow cross section that becomes greater along a direction from the inlet opening (104) to the housing (101), second storage elements (106) for storing thermal energy being arranged in the inlet passage (103) and at least one of the second storage elements (106) being arranged in the diffuser portion (105), the diffuser portion (105) having a first region (107) and a second region (108), which is formed downstream of the first region (107) along the direction from the inlet opening (104) to the housing (101), the at least one second storage element (106) being arranged in the second region (108) and the first region (107) being free from second storage elements (106), **characterized in that** the first region (107) has an opening angle (β) and the second region (108) has a further opening angle (α), the opening angle (β) being steeper than the further opening angle (α).

2. Heat accumulator (100) according to Claim 1,
the diffuser portion (105) having a diffuser angle (α) of 45° to 60°.

3. Heat accumulator (100) according to Claim 1 or 2,
the storage elements (102, 106) comprising stones, in particular lava stones, ceramic elements, brick elements, granite or basalt.

4. Heat accumulator (100) according to one of Claims 1 to 3, also having
an outlet channel (109), which is coupled to the housing (101) in such a way that the working fluid can flow out of the housing (101) through the outlet channel (109).

5. Heat accumulator (100) according to Claim 4,
the outlet channel (109) having an outlet opening (110), through which a further working fluid can flow from the housing (101) into the outlet channel (109), and
the outlet channel (109) having a nozzle portion (111), which has a flow cross section that becomes smaller along a direction from the housing (101) to the outlet opening (110).

6. Heat accumulator (100) according to Claim 5, also having third storage elements (112) for storing thermal energy, which are arranged in the outlet channel (109).

7. Steam power plant for generating electrical energy, the steam power plant having
a heat accumulator (100) according to one of Claims 1 to 6.

8. Method for storing thermal energy with the aid of a heat accumulator according to one of Claims 1 to 6, the method comprising
flowing of a working fluid through an inlet passage (103) into a housing (101) of a heat accumulator (100), the heat accumulator (100) having a housing (101) and first storage elements (102) for storing thermal energy,
the first storage elements (102) being arranged in the housing (101),
the inlet passage (103) having an inlet opening (104), through which the working fluid can flow into the inlet passage (103) from an area surrounding the heat accumulator, and
the inlet passage (103) having a diffuser portion (105), which has a flow cross section that becomes greater along a direction from the inlet opening (104) to the housing (101) and at least one second storage element (106) for storing thermal energy being arranged in the diffuser portion (105), the diffuser portion (105) having a first region (107) and a second region (108), which is formed downstream of the first region (107) along the direction from the inlet opening (104) to the housing (101), the at least one second storage element (106) being arranged in the second region (108) and the first region (107) being free from second storage elements (106),
**characterized in that**
the first region (107) has an opening angle (β) and the second region (108) has a further opening angle (α),
the opening angle (β) being steeper than the further opening angle (α).

## Revendications

1. Accumulateur de chaleur (100), présentant
un corps (101),
des premiers éléments accumulateurs (102) destinés à accumuler de l'énergie thermique,
dans lequel les premiers éléments accumulateurs (102) sont agencés dans le corps (101), et
un passage d'entrée (103) qui est couplé au corps (101) de telle manière qu'un fluide de travail peut être amené à circuler dans le corps (101) en passant par le passage d'entrée (103),
dans lequel le passage d'entrée (103) présente une ouverture d'entrée (104) à travers laquelle le fluide de travail peut être amené à circuler d'un voisinage de l'accumulateur de chaleur (100) jusque dans le passage d'entrée (103), et
dans lequel le passage d'entrée (103) présente une section de diffusion (105) qui présente une section transversale d'écoulement en augmentation le long d'une direction allant de l'ouverture d'entrée (104) vers le corps (101),
dans lequel des deuxièmes éléments accumulateurs (106) destinés à accumuler de l'énergie thermique sont agencés dans le passage d'entrée (103) et
au moins un des deuxièmes éléments accumulateurs (106) est agencé dans la section de diffusion (105),
dans lequel la section de diffusion (105) présente une première région (107) et une deuxième région (108) qui est formée à l'arrière de la première région (107) le long de la direction allant de l'ouverture d'entrée (104) vers le corps (101),
dans lequel le au moins un deuxième élément accumulateur (106) est agencé dans la deuxième région (108) et la première région (107) est exempte de deuxièmes éléments accumulateurs (106),
**caractérisé en ce que**
la première région (107) présente un angle d'ouverture (β) et la deuxième région (108) présente un autre angle d'ouverture (α),
dans lequel l'angle d'ouverture (β) est plus grand que l'autre angle d'ouverture (α).

2. Accumulateur de chaleur (100) selon la revendication 1,
dans lequel la section de diffusion (105) présente un angle de diffusion (α) compris entre 45° et 60°.

3. Accumulateur de chaleur (100) selon la revendication 1 ou 2,
dans lequel les éléments accumulateurs (102, 106) incluent des pierres, en particulier des pierres de lave, des éléments en céramique, des éléments en brique, du granit ou du basalte.

4. Accumulateur de chaleur (100) selon l'une quelconque des revendications 1 à 3, présentant en outre
un canal de sortie (109) qui est couplé au corps (101) de telle manière que le fluide de travail peut être amené à circuler hors du corps (120) en passant par le canal de sortie (109).

5. Accumulateur de chaleur (100) selon la revendication 4,
dans lequel le canal de sortie (109) présente une ouverture de sortie (110) à travers laquelle un autre fluide de travail peut être amené à circuler dans le canal de sortie (109) à partir du corps (101), et
dans lequel le canal de sortie (109) présente une section formant tuyère (111) qui présente une section transversale d'écoulement en diminution le long d'une direction allant du corps (101) vers l'ouverture de sortie (110).

6. Accumulateur de chaleur (100) selon la revendication 5, présentant en outre
des troisièmes éléments accumulateurs (112) destinés à accumuler de l'énergie thermique et qui sont agencés dans le canal de sortie (109).

7. Centrale thermique à vapeur destinée à produire de l'énergie électrique, ladite centrale thermique présentant
un accumulateur de chaleur (100) selon l'une quelconque des revendications 1 à 6.

8. Procédé d'accumulation d'énergie thermique à l'aide d'un accumulateur de chaleur selon l'une quelconque des revendications 1 à 6, ledit procédé présentant les étapes:
amener un fluide de travail à circuler dans un corps (101) d'un accumulateur de chaleur (100) en passant par un passage d'entrée (103),
dans lequel l'accumulateur de chaleur (100) présente un corps (101) et des premiers éléments accumulateurs (102) destinés à accumuler de l'énergie thermique,
dans lequel les premiers éléments accumulateurs (102) sont agencés dans le corps (101),
dans lequel le passage d'entrée (103) présente une ouverture d'entrée (104) à travers laquelle le fluide de travail peut être amené à circuler d'un voisinage de l'accumulateur de chaleur jusque dans le passage d'entrée (103), et
dans lequel le passage d'entrée (103) présente une section de diffusion (105) qui présente une section transversale d'écoulement en augmentation dans une direction allant de l'ouverture d'entrée (104) vers le corps (101), et
au moins un deuxième élément accumulateur (106) destiné à accumuler de l'énergie thermique est agencé dans la section de diffusion (105),
dans lequel la section de diffusion (105) présente une première région (107) et une deuxième région (108) formée à l'arrière de la première région (107) le long de la direction allant de l'ouverture d'entrée (104) vers le corps (101),
dans lequel le au moins un deuxième élément accumulateur (106) est agencé dans la deuxième région (108) et la première région (107) est exempte de deuxièmes éléments accumulateurs (106),
**caractérisé en ce que**
la première région (107) présente un angle d'ouverture (β) et la deuxième région (108) présente un autre angle d'ouverture (α),
dans lequel l'angle d'ouverture (β) est plus grand que l'autre angle d'ouverture (α).
